# EUROPEAN PATENT APPLICATION

(11) **EP 4 617 755 A1**
(43) Date of publication of application: **17.09.2025**
(21) Application number: 23914890.1
(22) Date of filing: 30.08.2023
(51) Int. Cl.: G02B 6/46, G02B 6/44

(54) **HEATING APPARATUS FOR HEAT SHRINK TUBING FOR OPTICAL CABLES**

(30) Priority: 03.01.2023 KR 20230000518
(71) Applicant: UCLSwift Co.,Ltd., Daejeon 34015 (KR)
(72) Inventor: JUN, Kun-Ik, Hamyang-gun Gyeongsangnam-do 50003 (KR); JUN, Sang-Chul, Okcheon-gun Chungcheongbuk-do 29045 (KR)
(74) Representative: BCKIP Part mbB
(86) International application number: PCT/KR2023/012844
(87) International publication number: WO 2024/147425

(57) **Abstract**

The present disclosure relates to a heating apparatus for a heat-shrinkable tube for an optical cable, and more particularly, to a heating apparatus that allows a heat-shrinkable portion for an optical connector to be easily and conveniently heat-shrunk by simply inserting the heat-shrinkable tube into a heating unit instead of using a heating device with flame such as a torch in the field, for example in a manhole. The heating apparatus for a heat-shrinkable tube of an optical cable provides waterproofing for the optical connector through a heat-shrinkable tube, can be used in a rechargeable manner without limitation on the working location, and is safe without the risk of fire even in a manhole.

## Description

### [Technical Field]

The present disclosure relates to a heating apparatus for a heat-shrinkable tube for an optical cable, which allows the heat-shrinkable tube for waterproofing between an outdoor optical connector and an optical cable assembly to be easily and safely heat-shrunk outdoors during the assembly of the outdoor optical connector.

### [Background Art]

In general, a heat-shrinkable tube refers to a tube that is fitted over a wire or cable to protect the wire or cable that covers a conductor, and has a characteristic of shrinking in the radial direction when heat is applied.

When heat-forming a heat-shrinkable tube, a worker at the work site fits the heat-shrinkable tube onto a wire or cable and then heats the heat-shrinkable tube that surrounds the wire (or cable) using a separate heating tool, such as a torch or burner.

Such a method of the related art requires a worker to heat-shrink a heat-shrinkable tube using a heating tool such as a gas torch, which not only is very cumbersome but also increases the working time, thereby resulting a problem that productivity decreases. In addition, depending on the type of heat-shrinkable tubes that are used, it is difficult to perform the work accordingly, and when working inside a manhole, there is also a safety issue due to the risk of explosion and fire caused by flammable substances inside the manhole.

### [Citation List]

### [Patent Literature]

### [Patent Literature 1]

Korean Patent Application Publication No. 10-2018-0088090 (published on August 03, 2018)

### [Summary of Invention]

### [Technical Problem]

The present disclosure has been made in an effort to solve the problems, and an objective of the present disclosure is to provide a heating apparatus for a heat-shrinkable tube for an optical cable, the heating apparatus being able to prevent the risk of fire during work in manholes, etc., enabling free adjustment of heating temperature and time based on the types of heat-shrinkable tubes that are used, and allowing rechargeable use without limitations in usage time or work location by allowing heat-shrinkable tubes to be easily and safely heat-shrunk without the risk of fire through a first heating unit, in which a heat-shrinkable tube portion covering an outdoor optical connector and optical cable is inserted horizontally, and a second heating unit installed above the first heating unit in an openable form.

Other objectives and advantages of the present disclosure will be described below through embodiments of the present disclosure. Further, the objectives and advantages of the present disclosure will be achieved by the components described in claims and combinations of the components.

### [Solution to Problem]

In order to achieve the objectives of the present disclosure,

A heating apparatus for heat-shrinking a heat-shrinkable tube D between an outdoor optical connector and an optical cable in a field when completing an outdoor optical connector C by assembling an optical cable A and an optical connector B, the heating apparatus comprising:
a first heating unit 10 in which a connection portion of the optical cable A and the optical connector B, on which the heat-shrinkable tube D is fitted on an outer circumference, is horizontally placed and inserted inside and which heats an outer circumference of the heat-shrinkable tube D;
a second heating unit 20 that is installed above the first heating unit 10 in an openable form and heats an upper portion of the heat-shrinkable tube D; and
a controller 30 controlling operation of the first heating unit 10 and second heating unit 20 and having a power jack 34,
wherein an outdoor optical connector can be waterproof to be available for outdoor use, and heating devices with flame are not used to heat the heat-shrinkable tube D in a field or a manhole to be able to use the heating apparatus without the risk of fire.

### [Advantageous Effects of Invention]

As described above, the present disclosure provides an effect in which the heating operation of a heat-shrinkable tube can be easily and safely performed by the two heating units, simply by horizontally inserting and mounting the heat-shrinkable tube at the heating position.

Further, the present disclosure provides an effect of preventing the risk of fire and safety accidents in advance during work inside a manhole since it does not use a heating device with flame.

Further, the present disclosure provides an effect that the heating temperature and time can be adjusted on the basis of the type of heat-shrinkable tubes.

Further, the present disclosure provides an effect that both rechargeable and power-connected manners are available, thereby resulting in no restriction on the working location.

### [Brief Description of Drawings]

FIG. 1 is a view illustrating a heating apparatus for a heat-shrinkable tube for an optical cable according to the present disclosure.
FIG. 2 is a view illustrating a heating apparatus for a heat-shrinkable tube for an optical cable further including a contact pad based on FIG. 1.
FIGS. 3 and 4 are views illustrating a state in which a heat-shrinkable tube is mounted in the heating apparatus for a heat-shrinkable tube for an optical cable according to the present disclosure.
FIG. 5 is a view illustrating a state in which a heat-shrinkable tube is being heat-shrunk by the heating apparatus for a heat-shrinkable tube for an optical cable according to the present disclosure.

### [Reference Signs List]

10: First heating unit
11: Housing
12: Detachable part
20: Second heating unit
21: Cover
22: Permanent magnet
30: Controller
31: Power ON/OFF section
32: Heating ON/OFF section
33: Battery power level display section
34: Power jack
41: First fixing part
42: Second fixing part
43: Adhesion pad
A: Optical cable
B: Optical connector
C: Outdoor optical connector
D: Heat-shrinkable tube

### [Description of Embodiments]

Before describing embodiments of the present disclosure in detail, it will be understood that the present disclosure is not limited to the components and arrangements of the components described below and shown in drawings. The present disclosure may be accomplished by other embodiments in various ways. Further, expressions and predicates stated herein in association with terms such as a device and directional terms (for example, "front", "back", "up", "down", "top", "bottom", "left", "right", and "lateral") are used only for simplifying the following description, and it does not mean that related devices and elements should simply have specific directions. Further, terms such as "first" and "second" are used in the detailed description and claims, but are not intended to mean relative priority or object.

The present disclosure has the following characteristics to achieve the objectives.

Hereinafter, exemplary embodiments of the present disclosure are described in detail with reference to the accompanying drawings. First, the terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the disclosure.

Therefore, the configurations described in the embodiments and drawings of the present disclosure are merely the most preferred embodiments but do not represent all of the technical spirit of the present invention. Thus, it should be understood that the present disclosure should be construed as including all the changes, equivalents, and substitutions included in the spirit and scope of the present disclosure at the time of filing this application.

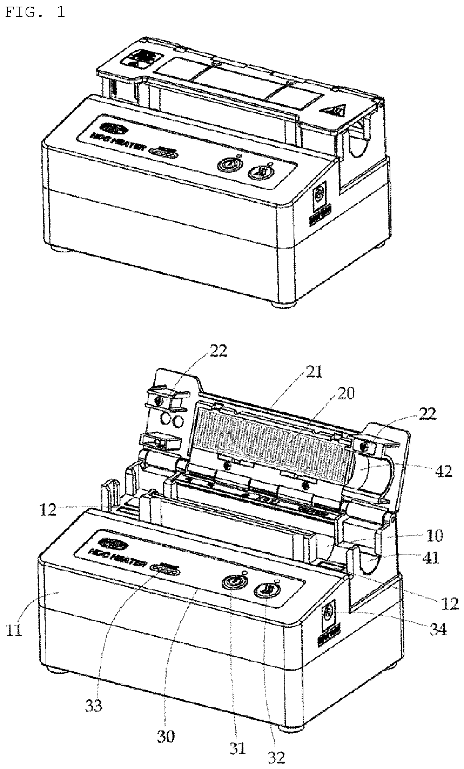

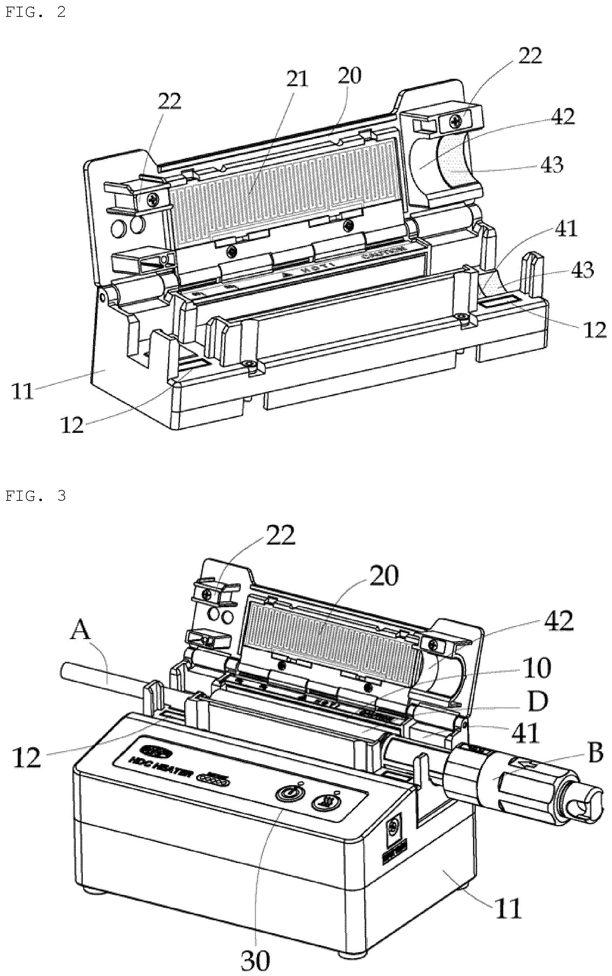

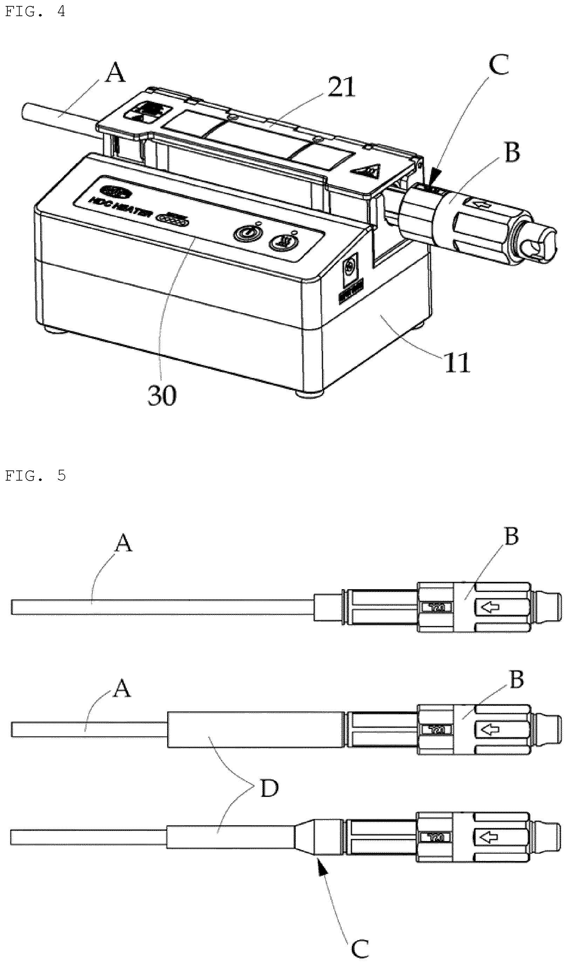

Hereafter, an apparatus for a heat-shrinkable tube for an optical cable according to an exemplary embodiment of the present disclosure is described in detail with reference to FIG. 1 to FIG. 5.

A heating apparatus for a heat-shrinkable tube for an optical cable according to the present disclosure is a heating apparatus for heat-shrinking a heat-shrinkable tube D in the field on the assembly portion of an optical cable A and an optical connector B when forming an outdoor optical connector C by assembling the optical cable A and the optical connector **B.**

Depending on embodiments, a first case may have two heating components of a first heating unit 10 and a second heating unit 20, and a second case may have only the first heating unit 10 without the second heating unit 20 being installed on the cover.

In the first case, a heating apparatus for heat-shrinking a heat-shrinkable tube D in the field when forming an outdoor optical connector C by assembling the heat-shrinkable tube D to an optical cable A and an optical connector B, includes:
a first heating unit 10 in which a connection portion of the optical cable A and the optical connector B, on which the heat-shrinkable tube D is fitted on the outer circumference, is horizontally placed and inserted inside and which heats the outer circumference of the heat-shrinkable tube D; and
a second heating unit 20 that is installed above the first heating unit 10 in an openable form and heats the upper portion of the heat-shrinkable tube D,
wherein the heating apparatus includes a function for controlling heating temperature and time, thereby easily heat-shrinking the heat-shrinkable tube D.

In the second case, a heating apparatus for heat-shrinking a heat-shrinkable tube D in the field when forming an outdoor optical connector C by assembling the heat-shrinkable tube D to an optical cable A and an optical connector B, includes:
a first heating unit 10 in which a connection portion of the optical cable A and the optical connector B, on which the heat-shrinkable tube D is fitted on the outer circumference, is horizontally placed and inserted inside and which heats the outer circumference of the heat-shrinkable tube D; and
a cover that is installed above the first heating unit 10 in an openable form, without any heating unit on the upper portion of the heat-shrinkable tube D so that heat from the first heating unit 10 is blocked,
wherein the heating apparatus includes a function for controlling heating temperature and time, thereby easily heat-shrinking the heat-shrinkable tube D.

In the second case, depending on embodiments, the apparatus is a heating apparatus for assembling the heat-shrinkable tube D onto the outer sheath of the optical cable A in the field, in which the first heating unit 10 is configured such that the connection portion of the optical cable A is horizontally placed and inserted inside, and configured to heat the outer circumference of the heat-shrinkable tube D, and the heating apparatus includes a function for controlling the heating temperature and time, thereby allowing the heat-shrinkable tube D to be easily heat-shrunk, and
the heating apparatus may be configured to operate using an internal battery or by connecting an external power source.

The heating apparatus for a heat-shrinkable tube for an optical cable according to the present disclosure enables waterproofing of the optical connector through the heat-shrinkable tube D, thereby allowing outdoor use of the outdoor optical connector C. Further, since the heating apparatus does not need to use heating devices with flames (e.g., torches) for heating the heat-shrinkable tube D in the field or inside a manhole, it allows work to be carried out without the risk of fire. The heating apparatus includes a first heating unit 10, a second heating unit 20, and a controller 30.

For the convenience of description, the following description is based on the form in which both the first heating unit 10 and the second heating units 20 are installed.

The first heating unit 10 is a heating device that is recessed horizontally on the top of a housing 11 such that the connection portion of the optical cable A and the optical connector B, on which the heat-shrinkable tube D is fitted on the outer circumference, is horizontally placed and inserted inside, thereby being able to heat the outer circumference of the heat-shrinkable tube D.

The first heating unit 10 has a U-shaped cross-section with a semicircular shape hollowed in the longitudinal direction inside, and has a depth such that the heat-shrinkable tube D is completely inserted without being exposed outside the housing 11.

The second heating unit 20 is a heating device that is installed in an openable form above the first heating unit 10 and heats the upper portion of the heat-shrinkable tube D.

That is, the second heating unit 20 is a heating part installed in a flat plate shape with a linear form on the underside of a cover that covers or opens the first heating unit 10 in the housing 11 where the first heating unit 10 is formed.

Of course, permanent magnets 22 are locally installed on the outer edge of the underside of the second heating unit 20, and detachable parts 12 made of metal are formed on the housing 11 at a location corresponding to the permanent magnets 22, so when the second heating unit 20 is closed to correspond to the top of the first heating unit 10, they can be detachably coupled.

In addition, on one side of the first heating unit 10 (the part where the optical connector B is placed), a first fixing part 41 forming a U-shaped groove is formed, and on one side of the second heating unit 20 corresponding to the first fixing part 41, a second fixing part 42 forming a U-shaped groove is formed.

Accordingly, when the second heating unit 20 is closed onto the first heating unit 10, the first fixing part 41 and the second fixing part 42 form a ring-shaped inner space, in which the optical connector B is positioned. The first and second fixing parts 41 and 42 are provided with adhesion pads 43 on the inner circumferential edges so that when the first and second fixing parts 41 and 42 are in close contact to the outer circumference of the optical connector B, the rotation and position of the optical connector B can remain stationary without changing.

The controller 30 is a component controlling the operation of the first heating unit 10 and the second heating unit 20 and having a power jack 34 on the top of the housing 11.

Operation control is performed by pressing or touching the top by the user or in a form where a display is identified. The power jack 34 is configured such that a power jack is fitted into the outer circumference of the housing 11, thereby charging a battery disposed in the housing 11 for a rechargeable use or allowing a power jack to be directly connected to the power jack 34.

For the operation control, a power ON/OFF section 31, a heating ON/OFF section 32, and a battery power level display section 33 in a display form are provided. When the heating ON section is pressed, a preset heating temperature and heating time are initially set. However, the heating temperature and heating time can be changed by a user depending on the type of heat-shrinkable tubes D used.

Although the present disclosure was described with reference to limited exemplary embodiments and drawings, the present disclosure is not limited thereto and may be changed and modified in various ways within the spirit of the present disclosure and claims described below by those skilled in the art.

## Claims

1. A heating apparatus for heat-shrinking a heat-shrinkable tube D in a field when forming an outdoor optical connector C by assembling the heat-shrinkable tube D to an optical cable A and an optical connector B, the heating apparatus comprising:
a first heating unit 10 in which a connection portion of the optical cable A and the optical connector B, on which the heat-shrinkable tube D is fitted on an outer circumference, is horizontally placed and inserted inside and which heats an outer circumference of the heat-shrinkable tube D; and
a second heating unit 20 that is installed above the first heating unit 10 in an openable form and heats an upper portion of the heat-shrinkable tube D,
wherein the heating apparatus includes a function for controlling heating temperature and time, thereby easily heat-shrinking the heat-shrinkable tube D.

2. A heating apparatus for heat-shrinking a heat-shrinkable tube D in a field when forming an outdoor optical connector C by assembling the heat-shrinkable tube D to an optical cable A and an optical connector B, the heating apparatus comprising:
a first heating unit 10 in which a connection portion of the optical cable A and the optical connector B, on which the heat-shrinkable tube D is fitted on an outer circumference, is horizontally placed and inserted inside, and that heats an outer circumference of the heat-shrinkable tube D; and
a cover that is installed above the first heating unit 10 in an openable form, without any heating unit on an upper portion of the heat-shrinkable tube D so that heat from the first heating unit 10 is blocked,
wherein the heating apparatus includes a function for controlling heating temperature and time, thereby easily heat-shrinking the heat-shrinkable tube D.

3. The heating apparatus of claim 1 or 2, wherein a power jack 34 allows both of a rechargeable manner of charging and using a battery inside in advance and a manner of connecting a using an external power source.

4. The heating apparatus of claim 1 or 2, further comprising a controller 30 controlling operation of the heating units and having a power jack 34,
wherein the controller 30 has a power ON/OFF section 31, a heating ON/OFF section 32, and a battery power level display section 33,
preset heating temperature and heating time are initially set in advance, and
the heating temperature and heating time can be changed depending on the type of heat-shrinkable tubes D that are used.

5. The heating apparatus of claim 1 or 2, wherein the first heating unit 10 has a U-shaped cross-section with a semicircular shape hollowed in a longitudinal direction inside.

6. The heating apparatus of claim 1, wherein the second heating unit 20 has a flat plate shape.

7. The heating apparatus of claim 1 or 2, wherein a first fixing part 41 and a second fixing part 42 having U-shaped grooves corresponding to each other, respectively, are formed on sides of the heating units, and the first fixing part 41 and the second fixing part 42 have an adhesion pad 43 on an outer circumference.

8. A heating apparatus for assembling a heat-shrinkable tube D on a sheath of an optical cable A in a field, wherein
a first heating unit 10 is configured such that a connection portion of the optical cable A is horizontally placed and inserted inside, and configured to heat an outer circumference of the heat-shrinkable tube D, and
the heating apparatus includes a function for controlling heating temperature and time, thereby easily heat-shrinking the heat-shrinkable tube D.

9. The heating apparatus of claim 8, wherein the heating apparatus uses a battery disposed therein or is connected to an external power source in use.
